# DEMANDE DE BREVET EUROPEEN

(11) **EP 2 541 873 A1**
(43) Date de publication de la demande: **02.01.2013**
(21) Numéro de dépôt: 12173417.2
(22) Date de dépôt: 25.06.2012
(51) Int. Cl.: H04L 29/08, G06F 17/30, G06Q 30/02

(54) **Procédé de gestion de contenus destinés à être distribués à une entité cliente, contrôleur de gestion, système de distribution et programme d?ordinateur correspondants.**

(30) Priorité: 30.06.2011 FR 1155894
(71) Demandeur: FRANCE TELECOM, 75015 Paris (FR)
(72) Inventeur: Stephan, Emile, 22560 PLEUMEUR BODOU (FR)
(74) Mandataire: Guy, Marion

(57) **Abrégé**

L'invention concerne un procédé de gestion d'au moins un contenu destiné à être distribué à au moins une entité cliente dans un réseau de communication.

Selon l'invention, un tel procédé comprend les étapes suivantes, mises en oeuvre par un contrôleur de gestion pour au moins une entité cliente :
- obtention (11) d'au moins une information de contexte d'utilisation de ladite entité cliente dans ledit réseau de communication ;
- détermination (12) d'une capacité d'interactivité de ladite entité cliente, en fonction de ladite au moins une information de contexte d'utilisation ;
- sélection (13), parmi un ensemble de présentations candidates pour ledit au moins un contenu, d'une présentation adaptée à ladite capacité d'interactivité.

## Description

### 1. Domaine de l'invention

Le domaine de l'invention est celui des télécommunications, et plus précisément celui de la distribution et de la visualisation d'applications multimédias scénarisées.

Encore plus précisément, l'invention concerne la gestion de contenus destinés à être distribués à des entités clientes, permettant notamment de tenir compte de caractéristiques des différentes entités clientes. De tels contenus sont notamment de type publicité ou jeux, et peuvent donc être interactifs.

### 2. Art antérieur

L'évolution des entités clientes de type téléphone portable, ordinateur, assistant personnel, téléviseur, etc, permet à ces entités de recevoir des données de plus en plus complexes, et notamment des contenus multimédias. De telles entités sont donc désormais aptes à recevoir des publicités en ligne.

De nos jours, la publicité s'impose comme le contenu le plus populaire et le plus lucratif de l'Internet. Cependant, l'exploitation des réseaux de distribution de contenus actuels n'intègre pas nativement la maîtrise des contraintes, des caractéristiques et de la performance pour une distribution efficace de ce type de contenu.

Ainsi, les publicités distribuées actuellement sur les entités clientes sont peu interactives, et leur implémentation consiste principalement à rediriger un utilisateur vers le serveur Web d'un annonceur, suite à une opération de l'utilisateur (clic par exemple). C'est donc le serveur Web de l'annonceur qui exécute la logique propre à l'animation de la publicité.

On peut noter que l'obtention d'un clic de l'utilisateur nécessite une forte connaissance des besoins de l'utilisateur à l'instant considéré. Or cette redirection étant sine die, le serveur de l'utilisateur ne communique plus ces informations sur les besoins de l'utilisateur au serveur Web de l'annonceur une fois que la redirection a été effectuée.

La redirection augmente donc la distance entre l'utilisateur/client et l'annonceur, alors que l'annonceur souhaiterait se rapprocher du client en connaissant ces besoins en tout instant. La qualité de services (en anglais QoS pour « Quality of Service ») et la qualité d'expérience (en anglais QoE pour « Quality of Experience ») diminuent donc, alors que l'annonceur souhaiterait qu'elles augmentent ou soient optimisées.

La redirection diminue également la relation entre l'utilisateur/client et l'annonceur serveur (en anglais CRM pour « Customer Relationship Management ») au moment de la redirection, alors que l'annonceur souhaiterait toujours se rapprocher du client. De nouveau, la QoS et la QoE diminuent, alors que l'annonceur souhaiterait qu'elles augmentent ou soient optimisées.

La plus value liée à la connaissance du contexte apportée par le serveur de l'utilisateur est donc perdue. Or comme indiqué ci-dessus, le site de l'annonceur a moins de connaissance sur l'utilisateur que le serveur à partir duquel l'utilisateur a cliqué, puisque le serveur qui a obtenu la redirection ne communique pas avec le serveur de l'annonceur par la suite.

Il existe donc un besoin pour que les informations relatives à l'utilisateur ne soient pas perdues au niveau de la redirection, mais puissent être exploitées par l'annonceur en tout instant.

### 3. Exposé de l'invention

Pour ce faire, l'invention propose une solution nouvelle qui ne présente pas l'ensemble de ces inconvénients de l'art antérieur, sous la forme d'un procédé de gestion d'au moins un contenu destiné à être distribué à au moins une entité cliente dans un réseau de communication.

Selon l'invention, un tel procédé comprend les étapes suivantes, mises en oeuvre par un contrôleur de gestion :
- obtention d'au moins une information de contexte d'utilisation de ladite entité cliente dans ledit réseau de communication ;
- détermination d'une capacité d'interactivité de ladite entité cliente, en fonction de ladite au moins une information de contexte d'utilisation ;
- sélection, parmi un ensemble de présentations candidates pour ledit au moins un contenu, d'une présentation adaptée à ladite capacité d'interactivité.

L'invention propose ainsi une solution nouvelle et inventive pour la gestion de contenus à distribuer à des entités clientes, permettant notamment de distribuer des contenus ciblés aux différentes entités, c'est-à-dire adaptés aux besoins des utilisateurs. L'invention permet ainsi d'éviter d'inonder les utilisateurs de contenus qui ne les intéressent pas, et permet donc d'augmenter la valeur des contenus distribués.

Pour ce faire, l'invention propose d'étudier le contexte d'utilisation de l'entité cliente, et de déterminer, à partir de ce contexte, une capacité d'interactivité de l'entité cliente. En effet, les inventeurs de la présente demande de brevet ont démontré que la mobilité notamment (déplacement, changement de terminaux) créé des situations variées aux capacités d'interactivité différentes en qualité et en niveau. De plus, cette capacité d'interactivité change selon la situation (quand on est au volant ou quand on est passager par exemple), selon le terminal (s'il dispose ou non d'un clavier par exemple), la taille de l'écran, etc. L'invention propose ainsi d'adapter la présentation du contenu au contexte d'utilisation de l'entité cliente, en sélectionnant une présentation adaptée à la capacité d'interactivité.

En particulier, la présentation sélectionnée peut être insérée dans au moins une session existante de l'entité cliente.

La présentation sélectionnée, correspondant à un contenu de type jeu ou publicité, par exemple prend ainsi en compte les actions et les événements intervenant sur les sessions existantes entre des applications multimédia et des entités clientes. On rappelle qu'on entend ici par contenu une application multimédia interactive. Ainsi, un jeu hébergé sur un serveur et accédé en ligne est un contenu au sens de l'invention.

Par exemple, la session existante repose sur la distribution d'un contenu principal, comme un film par exemple, et la présentation sélectionnée est un contenu secondaire correspondant à une publicité, destinée à être insérée dans le contenu principal.

Ces différentes étapes sont mises en oeuvre « localement » par un contrôleur de gestion, localisé dans un serveur de distribution de contenus ou dans une entité cliente, et ne nécessitent donc pas de redirection vers le serveur de l'annonceur. De cette façon, il n'existe plus de perte de la connaissance du contexte ou des besoins de l'utilisateur liée à cette redirection vers le serveur de l'annonceur.

En particulier, les informations nécessaires à l'animation des contenus, comme les informations de contexte et de prédiction, continuent à parvenir au serveur ou à l'entité gérant l'animation (serveur de distribution de contenus ou entité cliente), qui peut sélectionner lors de l'étape de sélection une présentation adaptée aux capacités de l'entité cliente.

De cette façon, le contenu, par exemple une application multimédia interactive de type jeu, publicité, etc, peut s'adapter au contexte d'interactivité de l'utilisateur/consommateur.

De plus, l'invention permet de fournir un service de régie publicitaire correspondant aux attentes des annonceurs.

Selon une caractéristique particulière de l'invention, ladite au moins une information de contexte d'utilisation appartient au groupe comprenant :
- une information de qualité de service ;
- une information de qualité d'expérience ;
- une information de localisation ;
- une information de déplacement ;
- une information relative à l'environnement extérieur ;
- une information relative à une activité de l'utilisateur ;
- une information de grégarité.

L'invention permet ainsi de tenir compte de différentes caractéristiques de l'entité cliente, et permet ainsi de placer des contenus multimédia interactif de courte durée (de type jeu ou publicité par exemple) en tenant compte par exemple du contexte et des prédictions d'interactivité et de grégarité des entités clientes.

En utilisant les informations de localisation et de déplacement des entités clientes par exemple, l'invention peut être utilisée pour distribuer des publicités locales, en transmettant, à des clients potentiels localisés à proximité d'un commerce, une publicité pour ce commerce sur les entités clientes localisées dans un rayon prédéterminé autour de ce commerce. Ces informations de localisation peuvent provenir du réseau de communication ou de l'entité cliente elle-même. Elles peuvent ainsi être obtenues par différentes techniques, de type GPS, géolocalisation assistée par GPS (en anglais GPS-A pour « assisted GPS »), triangulation, présence sur un point d'accès sans fil (en anglais « hot spot »), géolocalisation par protocole internet, etc, ou par différents équipements, de type entité cliente, station de base, équipement privé d'abonné (en anglais CPE pour « customer provided equipment », par AAA (en anglais « authentication, authorization and accounting », en français « authentification, autorisation, et traçabilité »), etc.

Il est ainsi possible, selon l'invention, de proposer des publicités locales en ligne.

Il est également possible de tenir compte de l'environnement extérieur, comme le froid, la pluie, ou d'une activité de l'utilisateur de l'entité cliente, comme une activité sportive, être au travail, en vacances, pour déterminer la capacité d'interactivité de l'entité cliente.

Il est encore possible de tenir compte de la situation de grégarité de l'utilisateur (c'est-à-dire de son entourage) pour déterminer la capacité d'interactivité de l'entité cliente.

Selon une autre caractéristique, le procédé de gestion selon l'invention comprend une étape d'extraction de ladite au moins une information de contexte d'utilisation à partir de métadonnées relatives au réseau de communication et/ou relatives à une session en cours d'exécution.

Cette étape d'extraction peut être mise en oeuvre au niveau du serveur de distribution de contenus.

Ainsi, si les étapes d'obtention d'au moins une information de contexte d'utilisation, détermination d'une capacité d'interaction, et de sélection sont mises en oeuvre par l'entité cliente, l'étape d'obtention consiste à recevoir l'information de contexte d'utilisation extraite au niveau du serveur de distribution de contenus lors de l'étape d'extraction.

Si les étapes d'obtention d'au moins une information de contexte d'utilisation, détermination d'une capacité d'interaction, et de sélection sont mises en oeuvre par le serveur de distribution de contenus, l'étape d'obtention consiste à extraire l'information de contexte d'utilisation.

En particulier, la ou les informations de contexte d'utilisation sont extraites à partir de métadonnées relatives au réseau de communication et/ou relatives à une session en cours d'exécution.

L'invention propose ainsi d'exploiter plus finement et plus rapidement l'environnement des sessions.

Dans un mode de réalisation particulier, le procédé de gestion selon l'invention comprend une étape de transmission à un superviseur d'informations relatives audit au moins un contenu et à ladite présentation sélectionnée.

Un tel superviseur est par exemple de type régie publicitaire. Il est ainsi possible pour la régie publicitaire d'obtenir une rémunération en fonction du niveau d'interactivité des contenus effectivement distribués.

Selon une caractéristique particulière, ledit au moins un contenu est défini par un script d'exécution comprenant :
- un identifiant d'entrée ;
- un identifiant d'étape, où une étape est associée audit ensemble de présentations candidates ;
- lesdites présentations candidates de chaque étape ;
- au moins un mot-clé, permettant de sélectionner une présentation adaptée à ladite capacité d'interactivité lors de ladite étape de sélection.

Selon l'invention, on définit ainsi le contenu par une liste d'étapes. Une étape peut être polymorphique, au sens où elle correspond à plusieurs présentations candidates pour un même contenu (par exemple une première présentation candidate correspondant à un texte présentant la ville de Santiago, une deuxième présentation candidate correspondant à une image présentant la ville de Santiago, une troisième présentation candidate correspondant à une vidéo présentant la ville de Santiago, une quatrième présentation candidate correspondant à une image présentant la ville de Santiago et une question demandant l'âge de la création de la ville, dont la réponse est capturée par saisie d'un nombre au clavier ou une commande vocale...).

En particulier, le procédé de gestion comprend une étape d'exécution dudit script d'exécution, mise en oeuvre par ladite entité cliente ou dans un serveur de distribution de contenus.

Selon au moins un mode de réalisation, le procédé de gestion comprend également une étape de mise à jour dudit script d'exécution ou d'au moins un paramètre d'exécution dudit script.

Cette mise à jour, qui peut être effectuée au niveau d'un superviseur de type régie, permet notamment de modifier les paramètres du script d'exécution pour améliorer l'efficacité de la relation client. Si l'on reprend l'exemple relatif à la distribution de publicités locales décrit précédemment, l'étape de mise à jour consiste à modifier les paramètres du script d'exécution par exemple pour augmenter la distance entre les entités clientes et le commerce afin d'augmenter le nombre de prospects.

Selon un autre aspect, le procédé de gestion selon l'invention comprend une étape de sélection d'au moins une entité cliente dans ledit réseau de communication, tenant compte dudit contenu à distribuer et/ou de ladite capacité d'interactivité de ladite entité cliente.

La mise à jour ou modification du script d'exécution, qui définit un contenu, permet alors de ne sélectionner que certaines entités clientes, pour ne conserver par exemple que les entités clientes ayant une capacité d'interactivité non nulle.

L'invention concerne également un contrôleur de gestion d'un contenu destiné à être distribué à au moins une entité cliente dans un réseau de communication.

Selon l'invention, un tel contrôleur comprend :
- des moyens d'obtention d'au moins une information de contexte d'utilisation de ladite entité cliente dans ledit réseau de communication ;
- des moyens de détermination d'une capacité d'interactivité de ladite entité cliente, en fonction de ladite au moins une information de contexte d'utilisation ;
- des moyens de sélection, parmi un ensemble de présentations candidates pour ledit contenu, d'une présentation adaptée à ladite capacité d'interactivité.

Un tel contrôleur de gestion est notamment adapté à mettre en oeuvre le procédé de gestion décrit précédemment. Il est par exemple localisé dans l'entité cliente ou dans un serveur de distribution de contenus.

Ce contrôleur de gestion pourra bien sûr comporter les différentes caractéristiques relatives au procédé de gestion selon l'invention, qui peuvent être combinées ou prises isolément. Ainsi, les caractéristiques et avantages de ce contrôleur de gestion sont les mêmes que ceux du procédé de gestion, et ne sont donc pas détaillés plus amplement.

L'invention concerne encore un système de distribution d'au moins un contenu à destination d'au moins une entité cliente dans un réseau de communication.

Selon l'invention, un tel système comprend :
- un superviseur,
- au moins un serveur de distribution de contenus,
- au moins une entité cliente,
   ledit au moins un serveur de distribution de contenus ou ladite au moins une entité cliente comprenant un contrôleur de gestion comprenant :
- des moyens d'obtention d'au moins une information de contexte d'utilisation de ladite entité cliente dans ledit réseau de communication ;
- des moyens de détermination d'une capacité d'interactivité de ladite entité cliente, en fonction de ladite au moins une information de contexte d'utilisation ;
- des moyens de sélection, parmi un ensemble de présentations candidates pour ledit contenu, d'une présentation adaptée à ladite capacité d'interactivité.

Dans un autre mode de réalisation, l'invention concerne un programme d'ordinateur comportant des instructions pour la mise en oeuvre d'un procédé de gestion tel que décrit précédemment lorsque ledit programme est exécuté par un processeur.

Ces instructions peuvent être mises en oeuvre par un contrôleur de gestion localisé dans l'entité cliente ou dans un serveur de distribution de contenus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes mises en oeuvre pour la gestion de la distribution d'au moins un contenu selon l'invention ;
- la figure 2 illustre l'architecture générale d'un système de distribution de contenus selon l'invention ;
- les figures 3 et 4 présentent deux exemples de mises en oeuvre de la gestion de la distribution de contenus selon l'invention.

### 5. Description d'un mode de réalisation de l'invention

Le principe général de l'invention repose sur la gestion « locale » de contenus à distribuer, ne nécessitant pas d'interaction avec un serveur de type régie publicitaire ou serveur d'un annonceur.

De cette façon, l'invention permet de s'affranchir de la perte d'information de contexte d'utilisation d'une entité cliente, survenant selon l'art antérieur lors de la redirection vers un tel serveur.

Selon l'invention, un ensemble de présentations candidates pour un même contenu est donc prévu localement au niveau d'un contrôleur de gestion (qui peut être localisé dans un serveur de distribution de contenus ou dans l'entité cliente), et le contrôleur de gestion peut sélectionner la présentation candidate représentative du contenu la mieux adaptée aux capacités de l'entité cliente, et notamment à ses capacités d'interactivité.

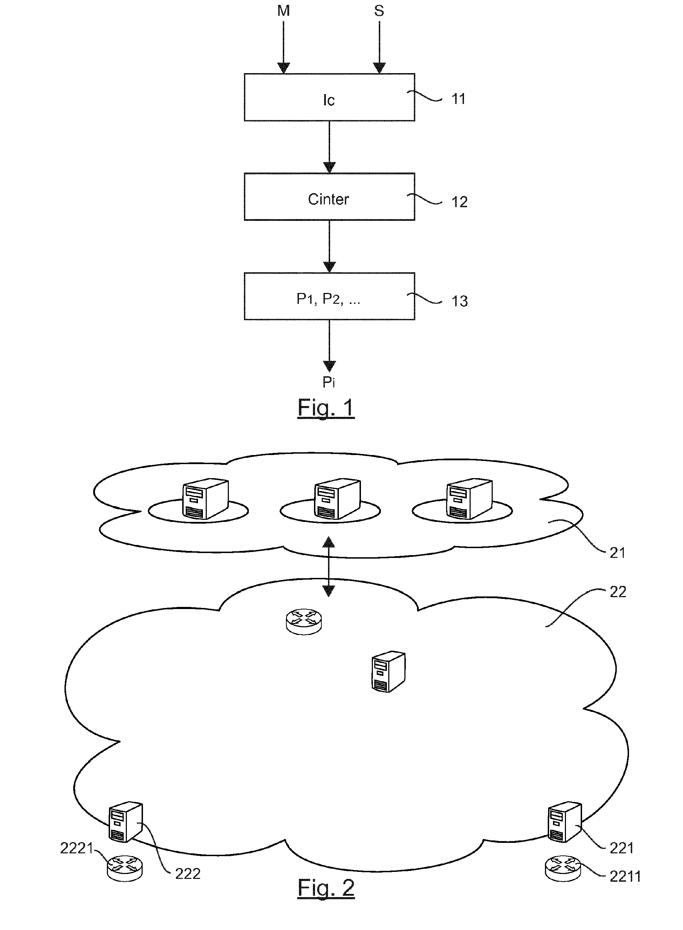

La figure 1 illustre les principales étapes de l'invention, mises en oeuvre dans un contrôleur de gestion par un procédé de gestion d'au moins un contenu destiné à être distribué à au moins une entité cliente dans un réseau de communication.

Au cours d'une première étape d'obtention 11, au moins une information Ic de contexte d'utilisation de l'entité cliente dans le réseau de communication est obtenue.

Cette étape d'obtention 11 peut mettre en oeuvre une extraction de l'information de contexte d'utilisation à partir de métadonnées M relatives au réseau de communication et/ou relatives à une session en cours S, ou une réception de l'information de contexte d'utilisation extraite préalablement par un serveur de distribution de contenus et transmise à l'entité cliente.

Au cours d'une étape suivante de détermination 12, on détermine la capacité d'interactivité Cinter de l'entité cliente, en fonction de la ou des informations Ic de contexte d'utilisation.

En d'autres termes, selon la situation, le type de terminal, etc, on détermine si l'utilisateur de l'entité cliente peut interagir avec le contenu (en répondant à une annonce, activant un lien, jouant à un jeu, etc), et quelle est la forme d'interaction la mieux adaptée à chaque étape du script d'exécution du contenu (commande par la voix, action de type clic, etc). La capacité d'interactivité définit ainsi le niveau et la forme d'interactivité acceptables par l'utilisateur.

Au cours d'une troisième étape de sélection 13, on sélectionne une présentation Pi adaptée à la capacité d'interactivité Cinter, parmi un ensemble de présentations candidates P1, P2, etc, pour le contenu, et plus précisément pour chaque étape du script associé au contenu.

Ainsi, si l'entité cliente dispose d'une faible capacité d'interactivité, par exemple parce que son utilisateur est au volant de sa voiture, la présentation candidate ne proposera pas d'interaction « visuelle ». En revanche, une interaction « audio» est possible, en sélectionnant une présentation candidate sonore, autorisant par exemple l'utilisateur à agir à l'aide de commandes vocales.

En revanche, si l'entité cliente dispose d'une forte capacité d'interactivité, par exemple parce que son utilisateur est passager d'une voiture ou d'un train, la présentation candidate sélectionnée pourra être plus interactive. Plusieurs échanges pourront donc avoir lieu entre l'entité cliente et le serveur de distribution de contenus.

L'interactivité est donc inférée du potentiel d'interactivité que fournit le contexte d'utilisation de l'entité cliente. Par exemple, la vitesse de déplacement d'un terminal est une information importante, mais peut s'avérer non suffisante. Plus précisément, il s'agit d'une information importante parce que les personnes se déplaçant ont des besoins spécifiques, mais cette information ne suffit pas à déterminer la capacité d'interactivité de l'entité cliente selon le contexte, et le moment où l'interactivité est importante. A titre d'exemples :
- au volant, une personne interagit faiblement avec un terminal (entité cliente), sauf si la voiture est immobile ;
- en voiture, les passagers sont disponibles et relativement inoccupés, donc peuvent interagir plus facilement ;
- dans le train, une personne a les mains libres et est relativement inoccupée, sauf si le train est arrêté (montée, descente, déplacement des personnes), et peut donc interagir facilement ;
- le niveau de grégarité (seul, inconnus, collègues, amis, famille) est également un critère important de la capacité d'interactivité. L' « élément déclencheur » de l'interactivité est différent suivant le niveau de grégarité. Par exemple, une entité cliente de type télévision est en général regardée par une famille ou des amis ; en voiture, les passagers sont rarement des inconnus ; en revanche, dans un train, les autres passagers sont généralement des inconnus.
- une personne en communication téléphonique a un très faible niveau d'interactivité avec une publicité en ligne si le terminal est un poste téléphonique. En revanche, la capacité d'interactivité est plus élevée si le terminal un ordinateur. La capacité d'interactivité peut donc dépendre du type de terminal. On note toutefois que cette information peut être déduite du plan d'adressage, puisque les familles de terminaux sont souvent regroupées en sous réseaux logiques.

Ces différentes informations de contexte d'utilisation de l'entité cliente peuvent donc être prises en compte pour déterminer la capacité d'interactivité de l'entité cliente.

L'invention remplit ainsi, selon au moins un mode de réalisation, au moins l'un des objectifs suivants, lorsque le contenu à distribuer est une application multimédia de type jeu ou publicité par exemple :
- augmenter l'efficacité de la distribution de publicités interactives en les positionnant suffisamment proches des utilisateurs/consommateurs pour recevoir les interactions entre les clients (entités clientes), le service hôte (serveur de distribution de contenus) et l'environnement ;
- donner de l'autonomie à la publicité afin d'augmenter sa performance, sa scalabilité (exécuter un nombre très élevé de publicités interactives dans de bonnes conditions) et de permettre d'autres formes et d'autres modes de consommation de la publicité ;
- prévoir différentes formes possible d'une même publicité (ie plusieurs présentations candidates) afin d'adapter le contenu au contexte rencontré ;
- introduire une forme de publicité ludique dans laquelle l'utilisateur/consommateur interagit avec l'annonceur.

Dans un mode particulier, un tel contenu, dit contenu secondaire, est notamment inséré dans un contenu principal.

La technique proposée est ainsi particulièrement adaptée à la distribution au niveau local de publicités multimédia interactives, qui peuvent notamment être rémunérées au résultat. Par la suite, de telles publicités sont nommées « Adslet », de l'anglais « ADvertising Streamlet AppLET ».

La technique proposée permet également d'éviter de saturer les entités clientes avec des publicités que les utilisateurs ne regarderont pas (ou s'efforcent de ne pas regarder), en limitant le nombre de publicités distribuées aux différentes entités clientes grâce à un meilleur ciblage.

Elle permet encore de sélectionner les entités clientes disposant d'une capacité d'interactivité non nulle au moment de la distribution, ou d'écarter les entités clientes dont la capacité d'interactivité est momentanément inadaptée. Pour ce faire, on propose selon l'invention une étape de sélection d'au moins une entité cliente dans le réseau de communication, tenant compte du contenu à distribuer et/ou de la capacité d'interactivité des entités clientes.

Elle permet par ailleurs de fournir aux adslets les évènements utiles pour dérouler leur scénario, coupler les publicités multimédia interactives aux évènements de l'environnement local, fournir à l'animateur de l'annonce (l'annonceur) la capacité de suivre et d'animer la distribution de ces publicités, notamment en mettant à jour les scripts d'exécution ou des paramètres des scripts, etc.

L'invention présente encore d'autres avantages, selon au moins un mode de réalisation :
- elle est adaptée aux extensions « Server-send event » et « WebSocket » de la technologie HTML5 (telles que définies dans le document http://dev.w3.org/html5/spec/Overview.html ) permettant l'insertion de données non sollicitées dans une session Web existante. Le contrôleur de gestion selon l'invention peut donc superposer de la publicité aux échanges des sessions Web, de vidéo à la demande, de direct, etc, usuelles ;
- elle propose un cadre pour la fourniture de nouveaux types de publicités particulièrement adaptés aux situations de mobilité et à l'animation de publicités locales (jeux, chasse au trésor, rallye, ventes flash...) ;
- la publicité « au résultat » s'oriente vers de l'animation publicitaire afin de capter l'attention de l'utilisateur. La technique proposée fournit à l'animation publicitaire les données et les évènements nécessaire à la réalisation d'animation publicitaire en réseaux impliquant plusieurs utilisateurs (internautes par exemple) ;
- la technique proposée met en relation différents contenus multimedia. Elle fournit une interface d'échange d'évènements entre contenus afin d'augmenter la richesse et la pertinence de la relation avec les clients. Elle permet notamment l'insertion de contenus publicitaires (contenus secondaires) dans d'autres types de contenus (contenus primaires ou principaux) ;
- la distribution locale de publicité nécessite la disponibilité d'informations de localisation géographique fiables disponibles dans les réseaux. La technique proposée valorise les informations et les prédictions de localisation géographique fiables connues de l'infrastructure des réseaux mobiles ;
- la technique proposée permet également de réduire la charge publicitaire sur les entités clientes, augmentant donc l'acceptabilité et l'attention sur celles effectivement distribuées. Ceci est particulièrement adapté aux écrans de tailles modestes des « téléphones intelligents » (en anglais « smartphones ») ;
- l'architecture proposée est également adaptée aux marchés des chaînes de distribution et des franchises : le siège de la marque peut préparer les publicités, les scripts d'exécution et leurs distributions aux contrôleurs de gestion. Les responsables de magasin peuvent assurer la fonction d'animateur des publicités.

L'invention présente également de nombreux avantages du fait de la localisation spécifique du contrôleur de gestion et du serveur de distribution des contenus.

En effet, l'animation du contenu « secondaire » à distribuer (publicité, jeu, etc) nécessite la connaissance des états et des évènements des sessions de contenus « primaires » et des sessions de contenus « secondaires ».

Selon l'état de la technique, les actions (par exemple les actions de réseaux d'enregistrement privés de type nPVR) sont simplement échangées entre l'entité cliente et l'application directement concernée. Les métadonnées décrivant les actions effectuées par les entités clientes n'existent pas ou, si elles existent, ne sont accessibles ni par les autres applications, ni par le réseau.

Selon l'invention, le serveur de distribution de contenus capture les évènements nPVR (de type pause, reprise...) de la lecture des contenus primaires Ci, les actions des contenus secondaires, les caractéristiques des blocs de contenus et les métadonnées, qu'il agrège de manière unifiée (anonymisation, uniformisation : par exemple une action nPVR signifie que l'utilisateur final est présent devant son écran et interactif... ) pour fournir des informations et des évènements apportant une grande valeur ajoutée au contrôleur de gestion des contenus secondaires (qui sont par exemple de type adslets).

Le serveur de distribution de contenus fournit au contrôleur de gestion les métadonnées de ses préfixes (localisation géographique, conditions extérieures, etc) et les événements nPVR reçus des sessions de distribution de contenu primaire Ci.

Selon un premier exemple, décrit ci-après, l'invention peut être mise en oeuvre avec une co-localisation des contenus secondaires (adslets) et du contrôleur de gestion dans le serveur de distribution de contenus. Elle est également réalisable avec une localisation des contenus secondaires dans l'entité cliente. La logique du contenu secondaire s'exécute donc dans l'entité cliente et le contenu secondaire communique avec le contrôleur de gestion via le réseau.

Selon un deuxième exemple, également décrit ci-après, l'invention peut être mise en oeuvre avec un contrôleur de gestion distant du serveur de distribution de contenus. Le contrôleur de gestion communique alors avec le serveur de distribution des contenus via le réseau.

La généralisation de ces deux exemples de mise en oeuvre peut nécessiter des interfaces standardisées entre les applications et le contrôleur de gestion.

Encore un autre avantage de l'invention repose sur la préparation d'une pluralité de présentations candidates pour un même contenu et la possibilité d'adaptation en continu de ces présentations. Il est ainsi possible de diffuser la présentation la mieux adaptée au contexte.

Les différentes présentations (texte, image, vidéo) d'un même contenu (de type adslet par exemple) alimentent les flux pour la distribution adaptative de contenus (en anglais « adaptive streaming »). Elles ne sont pas exclusives. Par exemple, une image conçue pour le contexte non interactif, peut être associée à un lien dans un contexte interactif. Elle peut être utilisée également comme première image lors de la diffusion d'une vidéo afin de palier au temps de temporisation classique en vidéo.

On décrit ci-après plusieurs exemples de mise en oeuvre de l'invention, pour la distribution de contenus de type adslet.

On rappelle qu'on entend ici par « adslet » une application interactive de courte durée (de l'ordre d'une minute), distribuée en ligne et rémunérée au résultat. Il s'agit d'un contenu hybride composé d'au moins l'un des éléments suivants : texte, image, vidéo, son, vecteur et graphisme, logique d'animation.

La logique d'animation pilote les différents aspects du fonctionnement de l'adslet, et notamment : le choix du niveau d'interactivité, la sélection d'une présentation adaptée au contexte, la sélection du débit de codage des contenus la composant, la remontée de résultats à un superviseur de type « régie publicitaire », le dialogue avec l'entité exécutant l'adslet, le dialogue avec le contrôleur de gestion, la réception d'évènements nécessaires à l'animation décrivant les interactions entre les entités clientes et le service hôte (par exemple vidéo à la demande, direct, jeux, etc).

Les métadonnées caractéristiques d'une adslet sont par exemple : les caractéristiques techniques de l'Adslet (interactivité, taille, type, audio, vidéo, image, photo, texte ...), un niveau de facturation, nombre d'insertion à effectuer, nombre de résultats attendus par heure, un type du contenu de l'adslet (actions, drôle, ...), un type de contenu recherché ou à éviter (plus d'action, plus drôle, moins de guerre, moins sanglant, ...), un type d'utilisateur recherché ou à éviter (âge, profil,...), une situation de grégarité recherchée ou à éviter (repas, famille, loisir, maison, voiture, gare, train, déplacement ...), un profil horaire, un niveau d'interactivité minimum (MIS) des contextes recherchés, un niveau de qualité d'expérience minimum (MoS) des contextes recherchés, une localisation recherchée (région, ville, quartier, magasin ...), etc.

L'animation de l'adslet est écrite dans un langage adapté à l'entité ou au serveur hébergeant son exécution, par exemple de type Javascript, HTML AJAX, Adobe Flash ou encore Java (marques déposées), notamment si l'adslet s'exécute sur un terminal ou un serveur Web.

On note également qu'une seule instance d'une adslet peut piloter plusieurs distributions simultanées d'une même adslet.

L'exécution de l'adslet est suivie par un contrôleur de gestion, également appelé contrôleur d'adslet.

Selon l'invention, le contrôleur de gestion peut être hébergé dans le serveur de distribution de contenus ou dans l'entité cliente. L'adlset peut s'exécuter dans le contrôleur de gestion ou dans une autre entité tel qu'un autre serveur ou l'entité cliente.

Le contrôleur de gestion peut notamment implémenter la logique « animation » des types d'adslets les plus communes.

La technique proposée est notamment adaptée à la distribution d'adslets dont les présentations candidates sont des contenus multimédia distribués sous forme de blocs ou « chunks ». Elle s'applique donc aux techniques de distributions de contenus en pair à pair (en anglais P2P pour « Peer-to-peer »), CDN (en anglais « Content Delivery Network », en français « réseau de distribution de contenu ») et « adaptive streaming ». En effet, un chunk multimédia a classiquement une taille de 10 Mo, ce qui correspond à une minute de film AVI/Divx de bonne définition (1Go/1h40). Une « petite » adslet, de l'ordre de 15 secondes, peut donc être transmise dans un seul chunk. Une présentation candidate en très haute définition peut donc être transmise dans un seul chunk. Ces deux aspects simplifient le positionnement de l'adslet, et permettent de réduire le temps de traitement et d'affichage d'une présentation candidate..

La technique proposée est également adaptée à la distribution d'adslets dans des conteneurs tels que définis dans les normes MPEG-4 parties 14, 16 ou 20, notamment en utilisant le format de fichier MP4.

On présente ci-après, en relation avec la figure 2, l'architecture générale d'un exemple de système de distribution de contenus selon l'invention.

Un tel système comprend une plate-forme de services de contenus 21, comprenant par exemple un serveur de jeu, un distributeur de contenu, et une régie publicitaire.

Selon l'exemple illustré, le réseau de distribution de contenu 22 est de type CDN, particulièrement bien adapté à la sélection et à la distribution de contenus sur des serveurs de distributions de contenus 221 et 222.

Les fournisseurs de contenus (en anglais « content provider ») distribuent tout ou partie de leurs contenus aux entités clientes 2211 et 2221 via le réseau CDN.

Selon cet exemple, les adslets ne sont pas distribuées suite à une demande des entités clientes 2211 et 2221. Les adslets sont des contenus particuliers que la plate-forme de services de contenus 21 (régie publicitaire par exemple) vient positionner dans les serveurs de distribution de contenus 221 et 222. Ensuite, ces serveurs de distribution de contenus 221 et 222 intègrent et adaptent au vol le contenu et le niveau d'interaction des adslets aux sessions en cours.

Les serveurs de distribution de contenus 221 et 222 sont décentralisés par rapport à la plate-forme de services de contenus, et distribuent les adlsets (et exécutent les adlsets) dans les sessions clientes de manière autonome. Ils disposent donc d'informations sur l'environnement local, c'est à dire relatives au contexte d'utilisation de l'entité cliente. Ils sont typiquement en relation étroite avec un écosystème. En d'autres termes, un serveur de distribution de contenus 221, 222 peut être spécialisé par communauté (par exemple activité sportive, adolescente, etc). Dans ce cas, la sélection des adslets à distribuer est également plus efficace.

Comme indiqué en relation avec l'état de la technique, les serveurs de distribution de contenus d'un réseau mobile classique sont centralisés et situés à distance des entités clientes (typiquement derrière le GGSN, en anglais « Gateway GPRS Support Node », qui est une passerelle d'interconnexion entre le réseau paquet mobile et les réseaux IP externes).

L'invention propose de rapprocher ces serveurs de distribution de contenus des entités clientes, par exemple en les localisant dans des stations de base du réseau mobile, dans des points d'accès équivalents au niveau domestique (femto cellule, SipTo - en anglais « Selected IP Traffic Offload », wifi communautaire), ou encore dans une passerelle dite « d'offload » (en français déchargement ») interfaçant ces équipements avec soit le coeur de réseau mobile, soit les réseaux Internet, donc avant le SGSN (an anglais « Serving GPRS Support Node », qui est une passerelle permettant l'acheminement des données dans les réseaux mobiles).

On décrit ci-après deux exemples de mise en oeuvre de l'invention.

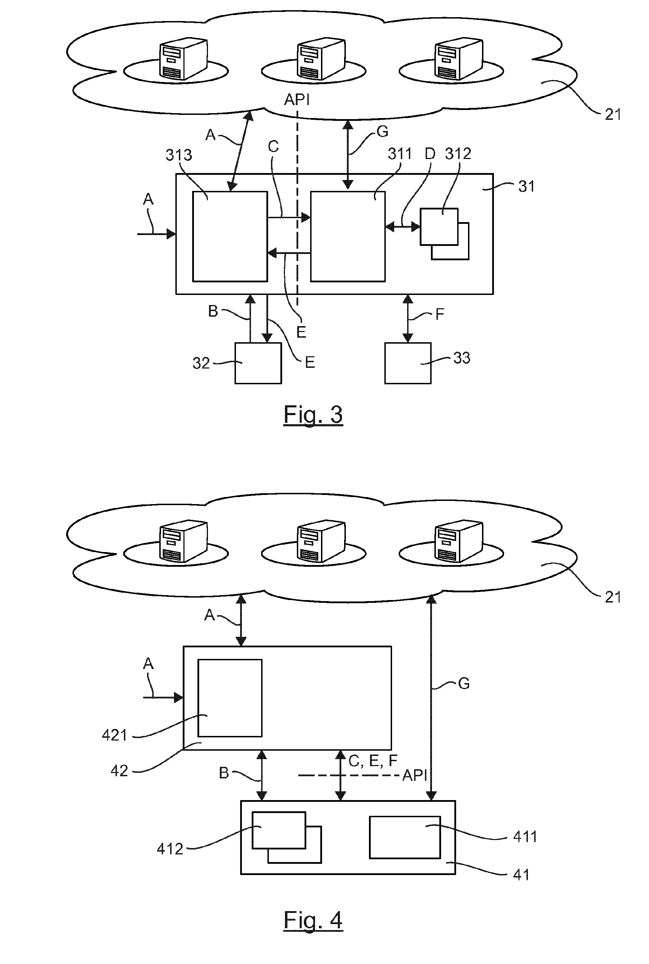

La figure 3 illustre un premier exemple de mise en oeuvre de l'invention, selon lequel le contrôleur de gestion 311 est intégré dans le serveur de distribution de contenus 31. Un tel contrôleur de gestion 311 permet notamment de contrôler l'insertion d'adslets dans un contenu à distribuer.

Le serveur de distribution des contenus 31 reçoit des métadonnées des entités clientes 32 dont il a la charge et extrait des informations relatives au contexte d'utilisation de ces entités clientes : mesure la qualité de service et de la qualité d'expérience des adslets (contenus secondaires) et des contenus primaires Ci par préfixe, charge CPU et mémoire, geolocalisation...

Le serveur de distribution de contenus 31 héberge le contrôleur de gestion 311 et le contrôleur de sessions 313.

Le contrôleur de gestion 311 héberge l'exécution des adslets 312 et assure l'interfaçage entre le serveur de distribution de contenus 31 et les adslets 312. La capacité du contrôleur de gestion 311 à mettre en relation les contenus primaires Ci et les contenus secondaires de type adslets est adaptée aux technologies « Server-sent events » et « Websocket » de HTML5 introduites précédemment. Le contrôleur d'adslet peut donc introduire des données (en anglais « push ») dans les sessions Web des entités clientes 32 et/ou d'un animateur 33.

Le contrôleur de gestion 311 interface la distribution du contenu et l'interactivité de l'adslet, il comptabilise nativement les « résultats » des instances d'adslets qu'il regroupe par adslet et envoie à la régie publicitaire de la plate-forme de services de contenus 21. Cette architecture est donc scalable puisque sa capacité augmente avec le nombre de serveurs de distribution de contenus. Elle accroît aussi la rapidité des interactions des adslets.

On décrit ci-après, en relation avec la figure 3, les échanges entre les différents éléments du réseau.

Tout d'abord, la régie de la plate-forme de services de contenus 21 reçoit une publicité interactive PUBi à distribuer. Elle intègre les différentes présentations candidates de cette publicité dans un script d'exécution d'une adslet ADSLETi.

Le serveur de distribution de contenus 31 distribue des contenus primaires Ci et dispose de contenus secondaires de type adslet ADSLETi 312 à distribuer. La sélection et la distribution des contenus primaires et secondaires peuvent être mises en oeuvre selon le procédé de préparation et de distribution de contenus présenté dans la demande de brevet français n°1051165 déposée le 18 février 2010 au nom du même Déposant.

Les entités clientes 32 utilisent des applications et des services de distribution de contenu (jeu ou contenu produit en temps réel).

Le serveur de distribution de contenus 31, via le contrôleur de sessions 313 selon ce premier exemple, collecte (A, B) des métadonnées relatives au réseau et/ou aux sessions en cours et les actions entreprises ou demandées par les entités clientes 32 et les applications (vitesse, geolocalisation, métadonnées des chunk des contenus distribués, commande, signalisation, actions de réseaux d'enregistrement privés de type nPVR (en anglais « Network personal video recorder »), de jeux, etc).

Il extrait de ces métadonnées des informations de contexte d'utilisation des entités clientes, et présente ces informations (par session, groupe de session, ou type de session ...) au fur et à mesure sur une interface de programmation API entre le contrôleur de sessions 313 et le contrôleur de gestion 311. Ces informations sont par exemple structurées sous la forme de contexte et de prédiction dans un profil de session.

Le serveur de distribution de contenus 31 indique également au contrôleur de gestion 311 l'existence de nouvelles sessions.

Le contrôleur de gestion 311 reçoit (C) les informations relatives aux sessions au fur et à mesure. Il créé le profil de session de chaque nouvelle session. Il sélectionne les sessions pertinentes en exécutant certains filtres d'un script d'exécution des adlsets sur les profils des sessions.

Le contrôleur de gestion 311 reçoit (C) également les métadonnées relatives au réseau au fur et à mesure. Il met à jour les paramètres concernés des profils des sessions qu'il traite.

Le contrôleur de gestion 311 exploite (D) ces informations pour déterminer une capacité d'interactivité de l'entité cliente 32 et animer en conséquence les adslets 312, en sélectionnant une présentation adaptée à la capacité d'interactivité de l'entité cliente 32. Il communique (E) au serveur de distribution de contenus 31, sur l'interface de programmation API, la présentation sélectionnée comprenant le contenu secondaire à insérer dans les sessions.

Plus précisément, les adslets 312 s'exécutent suivant un script d'exécution spécifique, tel que présenté ci-après.

Le contrôleur de gestion 311 met à jour les paramètres (événements reçus...) dans le contexte d'exécution de chaque adslet. Ces paramètres sont par exemple injectés dans un modèle de document, par exemple dans le modèle DOM (en anglais « Document Object Model ») de l'environnement Javascript de chaque adslet, tel que défini dans le document http://www.w3.org/DOM/. Une adslet accède à ces informations à partir de l'interface synchrone ou événementielle du modèle de document. L'adslet s'abonne à la réception des événements en appelant une fonction spécifique, similaire à la fonction de « document.captuteEvents() » de Javascript, telle que décrite dans le document http://www.java2s.com/Tutorial/JavaScript/ 0380__Window/windowcaptureEvents.htm. L'adslet accède aux autres données en lecture directe via le modèle de document. Par exemple, ce modèle de document stocke la valeur de la prédiction de vitesse du terminal dans une variable locale à l'adlset, en utilisant une commande de type « adsl.speed=md.prediction.speed ».

Le contrôleur de gestion 312 communique (E) alors au serveur de distribution de contenus 31, via le contrôleur de sessions 313, le contenu des adslets à insérer dans les sessions.

Le terminal 33 de l'animateur de l'adslet dispose d'une interface adaptée à la supervision du déroulement de l'animation. Elle lui permet d'ajuster (F) les paramètres du script d'exécution. Par exemple, on considère qu'une adslet d'animation a besoin de dix prospects (c'est-à-dire dix entités clientes) pour être attractive ou rentable. Afin d'atteindre ce nombre, l'animateur peut accroître la zone de prospection en augmentant la zone de localisation de l'adlset à 2Kms par exemple. Cela se traduit par la mise à jour de la variable du modèle de document de l'adlset équivalent à la commande « Adsletl.anim.localisation.radius=2km ». Cette interface permet également à l'animateur d'interagir avec les prospects en chat, en voix sur IP ou en vidéo.

Finalement, le contrôleur de gestion peut fournir (G) des statistiques d'exécution par adslet à la régie publicitaire de la plate-forme de services de contenus 21, qui joue le rôle de superviseur.

On note que, selon l'invention, la capture d'information de type métadonnées relatives au réseau et le dialogue entre le serveur de distribution de contenu (éventuellement via le contrôleur de session) et le contrôleur de gestion permettent d'éviter la distribution, à une entité cliente, d'un contenu dont la présentation n'est pas adaptée à ses besoins et possibilités d'interaction.

La figure 4 illustre un deuxième exemple de mise en oeuvre de l'invention, selon lequel le contrôleur de gestion 411 est intégré dans l'entité cliente 41.

Selon cet exemple, le serveur de distribution de contenu 42 héberge le contrôleur de sessions 421.

Des échanges similaires à ceux décrits en relation avec le premier exemple sont mis en oeuvre, les mêmes lettres et références numériques correspondants aux mêmes échanges et éléments du réseau. Le contrôleur de sessions 421 et le contrôleur de gestion 411 communiquent via une interface de programmation API telle que décrite en relation avec la figure 3.

On note selon ce deuxième exemple que le contrôleur de gestion 411 et les adslets 412 s'exécutent dans l'entité cliente, dans un terminal de l'animateur, ou dans un hôte pair-à-pair. Trois modes de fonctionnement peuvent donc être mis en oeuvre :
- un mode « client » : l'adslet s'exécute dans le terminal du prospect (entité cliente) en terme de publicitaire ;
- un mode « animateur » : l'adslet s'exécute dans le terminal de l'animateur de la publicité (comme l'ordinateur du responsable du commerce par exemple) ;
- un mode « hôte pair-à-pair» : l'adslet s'exécute en pair à pair (en anglais P2P pour
   « Peer-to-Peer ») sur l'un des terminaux de la zone (entité cliente ou terminal de l'animateur).

Selon un mode de réalisation particulier de l'invention, une adslet est définie par un script d'exécution, comprenant :
- un identifiant d'entrée, noté ID ;
- un identifiant d'étape ;
- l'ensemble des présentations candidates représentatives d'un même contenu (i.e. d'une même publicité) ;
- au moins un mot-clé ou tag, permettant de sélectionner une présentation adaptée à la capacité d'interactivité déterminée.

Chaque adslet est définie par une liste d'étapes, une étape étant associée à l'ensemble des présentations candidates. Par exemple, une étape correspond à plusieurs présentations candidates pour un même contenu (par exemple une première présentation candidate correspondant à un texte présentant la ville de Santiago, une deuxième présentation candidate correspondant à une image présentant la ville de Santiago, une troisième présentation candidate correspondant à une vidéo présentant la ville de Santiago).

Les mots clés définis dans le script sont utilisés pour identifier l'appartenance d'un item aux différents profils (niveau d'interactivité, langue, niveau de résolution, niveau de grégarité ...) de la présentation de l'adslet. Ces mots-clés sont stockés sous la forme de couple (type, valeur), par exemple : Langue=français, Type de contenu=video, Qualité=haute définition, niveau d'interactivité = interactif, niveau de grégarité = faible, etc.

Différents types peuvent également être définis pour la grégarité (inconnu, en famille, au travail, etc), pour qualifier l'environnement extérieur (supermarché, pluie, etc), pour qualifier les activités de l'utilisateur (en vacances, au travail, etc), etc.

D'autres types peuvent également être définis pour réaliser des animations complexes (V pour vecteurs graphiques, S pour script, G pour script d'animation graphique, etc).

On présente en annexe A, qui fait partie intégrante de la présente description, un exemple de script d'exécution d'une adslet.

Selon cet exemple, plusieurs présentations candidates sont définies à l'étape 1 : un texte présentant la ville de Santiago, une image présentant la ville de Santiago, ou une vidéo présentant la ville de Santiago. Les informations de contexte d'utilisation de l'entité cliente permettent de déterminer le niveau d'interactivité de l'entité cliente, et de sélectionner la présentation candidate la mieux adaptée aux besoins du client.

Plus précisément, pour l'exécution de l'adslet, le contrôleur de gestion sélectionne pour chaque étape la forme la mieux adaptée au contexte d'utilisation. Le choix de la forme d'une étape se fait par une liste de sélections tenant compte de la présence des tags et de la comparaison avec les valeurs du profil de la session.

Le contrôleur de gestion applique la première étape (étape 0) du script de l'adslet aux sessions présentées par les contrôleurs de session pour sélectionner les entités clientes ou les sessions correspondantes, puis il exécute la première étape du script de l'adslet aux sessions retenues.

Par exemple, une session S1 dont l'entité cliente est graphique et évolue dans une situation permettant une bonne interactivité et une réception de vidéo HD peut être définie par le profil suivant :
S1.terminal.player = Video
S1.context.interactivity = Interactive
S1.context.video.MoS = HD

Le contrôleur de gestion extrait l'instance d'adslet qu'il appliquera à la session S1 en appliquant le script de la première étape Etape0 au profil de session de S1 :
Etape1:Tags.C == userSession.terminal.player
   Conserver Id 3 et 4
Etape1:Tags.Q == userSession.context.video.MoS
   Conserver Id 4
Etape2:Tags.I == userSession.context.interactivity
   Conserver Id 5 et 6

Un exemple d'instance d'adslet appliquée à la session S1 est présenté en annexe A.

A titre d'exemple, le langage utilisé peut être le JavaScript (marque déposée) afin de disposer d'adslet pouvant s'exécuter sur un serveur Web (serveur de distribution de contenus) ou dans un navigateur Web (entité cliente).

Selon un mode de réalisation de l'invention, l'activité d'une adslet peut être suivie. Pour ce faire, le contrôleur de gestion comporte une logique de supervision et suivi de l'activité des adslets. Par exemple, il fournit les données nécessaires à la comptabilisation de l'activité d'une adslet et à la facturation à la régie publicitaire.

Si l'on se place à nouveau dans l'exemple de publicité locale mentionnée précédemment, un animateur peut suivre l'évolution du nombre de prospects (c'est-à-dire du nombre des entités clientes potentiellement sélectionnables) et modifier le paramétrage de l'adslet afin de maintenir un nombre suffisant de prospects, par exemple en élargissant la zone géographique de sélection ou en réduisant le niveau minimum d'interactivité requis. Il peut ainsi orienter la publicité vers ses propres objectifs.

Il est ainsi possible d'ajuster l'interface homme/machine en fonction de la capacité d'interactivité des entités clientes. En effet, le contrôleur d'une adslet dont le scénario est conçu pour satisfaire plusieurs niveaux d'interactivité revoit le mode d'interactivité d'une session au fur et à mesure et oriente le scénario pour l'adapter au mode d'interactivité existant :
- si la vitesse d'un mobile augmente et l'utilisateur est en voiture, la présentation candidate sélectionnée est celle qui fournit l'information sous forme vocale plutôt que sous forme textuelle ;
- si l'interactivité est nulle, l'animation distribue un simple affichage, comme une image animée comportant des coordonnées (numéro de téléphone, url, email, ...). Le nombre de contacts reçus à ces coordonnées pourra être ajouté au nombre de résultats de cette adslet.

On présente ci-après un exemple de pilotage des adslets par les actions de réseaux d'enregistrement privés de type nPVR reçues de la session de contenu Ci d'une même entité cliente. Le scénario de l'adslet se déroule différemment suivant les actions nPVR reçues :
- l'adslet est interrompue prématurément si elle ne reçoit aucune interaction malgré l'existence d'actions nPVR sur le contenu (ce qui signifie que l'utilisateur de l'entité cliente n'est pas intéressé, ne regarde pas la publicité, etc), ou si l'action est « pause » ;
- après une action de type « Pause » du contenu, l'adslet reprend à la réception de l'action nPVR « Reprise » (en anglais « Resume ») ;
- pour un terminal, l'adslet est interrompue prématurément si un message d'urgence doit être diffusé sur ce préfixe (accident...).

On cherche de plus à éviter l'insertion d'une publicité interactive quand la session enregistre le contenu en nPVR, et à éviter la répétition de la même publicité interactive quand le pointeur de lecture du contenu principal repasse sur la même zone du contenu principal.

Il est également possible d'ajuster en temps réel des profils d'insertion. A titre d'exemples :
- le contrôleur de gestion peut ajuster en temps réel le moment d'insertion d'une adslet en fonction des « résultats » qu'elle obtient sur les autres sessions ;
- le contrôleur de gestion peut annuler la distribution d'une Adslet dont les résultats obtenus sur les autres sessions sont mauvais ;
- le contrôleur de gestion peut sélectionner, à partir des prédictions de vitesse d'un terminal mobile, le chunk de la plage de chunks dans lequel on peut insérer l'adslet.

Il est aussi possible d'ajuster l'insertion des adslets aux actions de jeux et aux signaux d'insertion de l'application de jeux. La distribution de publicités pouvant être attachées à une partie d'un jeu doit à cet effet disposer des actions de jeux et des zones de jeux dans lesquelles peut être effectuée l'insertion.

A titre d'exemple, l'invention peut être mise en oeuvre pour la distribution de contenus secondaires de type jeux.

Dans ce cas, le contrôleur de gestion reçoit une action d'une instance d'adslet. Il la communique à la logique « animation » de l'adslet qui décide de la rediffuser aux autres instances de cette adslet dans le préfixe considéré. L' adslet est par exemple une animation, une compétition ou un jeu d'adresse entre utilisateurs/internautes pour gagner un cadeau à retirer dans un magasin proche. L'adslet peut contenir une logique « animation » s'interfaçant avec le serveur de distribution de contenus.

Selon un autre exemple, l'invention peut être mise en oeuvre pour la distribution de contenus secondaires de type animation extérieure.

Dans ce cas, à partir des métadonnées de prédiction de vitesse et de localisation, le serveur de distribution de contenu peut sélectionner un ensemble d'entités clientes se déplaçant peu, situées dans le quartier correspondant à une publicité évènementielle à distribuer. Il s'agit par exemple d'une chasse aux trésors ou d'un rallye pour une animation de quartier dans un cadre commercial ou touristique. Les prospects doivent passer par une succession de boutiques dans lesquelles ils obtiennent des indices, le premier arrivé au trésor reçoit le cadeau annoncé. Le serveur de distribution de contenu fournit régulièrement au contrôleur de gestion la localisation approximative de chaque instance d' adslet. Il peut distribuer à chaque instance des informations directionnelles ou de type « chaud » , « froid ».

Il est également possible d'échanger les profils des sessions entre serveurs de distribution de contenus lorsque les entités clientes se déplacent d'un point à un autre.

Si l'adslet est déjà présente sur le serveur de distribution de destination, seul le contexte de l'adslet dans la session se déplace. L'adslet peut également être pré-positionnée au vol à partir d'un réseau de distribution de contenu de type CDN.

### ANNEXE A

Exemple de script d'exécution d'une adslet :

| **Id** | **Etape** | **Contenu** | **Tags** |
|---|---|---|---|
| **0** | **Etape0** | **Etape1:Tags.T == userSession.terminal.player** | **S=main** |
| | | **Etape1: Tags.R == userSession.context.MoS** | |
| | | **Etape2: Tags.I == userSession.context.interactivity** | |
| | | ... | |
| | | .. | |
| | **Etape1** | **texte présentant la ville de Santiago (Cuba)** | **L=français,** |
| | | | **C=texte** |
| **2** | **Etape1** | **Image présentant la ville de Santiago (Cuba)** | **L=français,** |
| | | | **C=image** |
| **3** | **Etape1** | **Video présentant la ville de Santiago (Cuba)** | **L=français,** |
| | | | **C=video** |
| | | | **Q=SD** |
| **4** | **Etape1** | **Video présentant la ville de Santiago (Cuba)** | **L=français,** |
| | | | **C=Video** |
| | | | **Q=HD** |
| **5** | **Etape2** | **En quelle année fut fondée la ville de Santiago (Cuba)?** | **L=français,** |
| | | | **C=Texte** |
| | | | **I=Interactif** |
| **6** | **Etape2** | **Si Etape2.reponse == "1515" alors Etape4 sinon Etape5** | **S=Test** |
| **7** | **Etape3** | **...** | |
| **8** | **Etape4** | **...** | |

Exemple d'instance d'une adslet :

| **Id** | **Etape** | **Contenu** | **Tags** |
|---|---|---|---|
| **0** | **Etape0** | **Etape1:Tags.T == userSession.terminal.player** | **S=main** |
| | | **Etape1:Tags.R == userSession.context.MoS** | |
| | | **Etape2:Tags.I == userSession.context.interactivity** | |
| | | ... | |
| | | ... | |
| **4** | **Etape1** | **Video présentant la ville la ville de Santiago (Cuba)** | **L=français,** |
| | | | **C=Video** |
| | | | **Q=HD** |
| **5** | **Etape2** | **En quelle année fut fondée la ville de Santiago (Cuba)?** | **L=français,** |
| | | | **C=Texte,** |
| | | | **I=Interactif** |
| **6** | **Etape2** | **Si Etape2.reponse == "1515" alors Etape4 sinon Etape5** | **S=Test** |
| **7** | **Etape3** | **...** | |
| **8** | **Etape4** | **...** | |

## Revendications

1. Procédé de gestion d'au moins un contenu destiné à être distribué à au moins une entité cliente dans un réseau de communication,
**caractérisé en ce qu'**il comprend les étapes suivantes, mises en oeuvre par un contrôleur de gestion pour ladite au moins une entité cliente :
- obtention (11) d'au moins une information de contexte d'utilisation de ladite entité cliente dans ledit réseau de communication ;
- détermination (12) d'une capacité d'interactivité de ladite entité cliente, en fonction de ladite au moins une information de contexte d'utilisation ;
- sélection (13), parmi un ensemble de présentations candidates pour ledit au moins un contenu, d'une présentation adaptée à ladite capacité d'interactivité.

2. Procédé de gestion selon la revendication 1, **caractérisé en ce que** ladite au moins une information de contexte d'utilisation appartient au groupe comprenant :
- une information de qualité de service ;
- une information de qualité d'expérience ;
- une information de localisation ;
- une information de déplacement ;
- une information relative à l'environnement extérieur ;
- une information relative à une activité de l'utilisateur ;
- une information de grégarité.

3. Procédé de gestion selon la revendication 1, **caractérisé en ce qu'**il comprend une étape d'extraction de ladite au moins une information de contexte d'utilisation à partir de métadonnées relatives audit réseau de communication et/ou relatives à une session de ladite entité cliente en cours d'exécution.

4. Procédé de gestion selon la revendication 1, **caractérisé en ce qu'**il comprend une étape d'insertion de ladite présentation sélectionnée dans au moins une session de ladite entité cliente.

5. Procédé de gestion selon la revendication 1, **caractérisé en ce qu'**il comprend une étape de transmission à un superviseur d'informations relatives audit au moins un contenu et à ladite présentation sélectionnée.

6. Procédé de gestion selon la revendication 1, **caractérisé en ce que** ledit au moins un contenu est défini par un script d'exécution comprenant :
- un identifiant d'entrée ;
- un identifiant d'étape, où une étape est associée audit ensemble de présentations candidates ;
- lesdites présentations candidates de chaque étape ;
- au moins un mot-clé, permettant de sélectionner une présentation adaptée à ladite capacité d'interactivité lors de ladite étape de sélection.

7. Procédé de gestion selon la revendication 6, **caractérisé en ce qu'**il comprend une étape d'exécution dudit script d'exécution, mise en oeuvre par ladite entité cliente ou un serveur de distribution de contenus.

8. Procédé de gestion selon la revendication 6, **caractérisé en ce qu'**il comprend une étape de mise à jour dudit script d'exécution ou d'au moins un paramètre d'exécution dudit script.

9. Procédé de gestion selon la revendication 1, **caractérisé en ce qu'**il comprend une étape de sélection d'au moins une entité cliente dans ledit réseau de communication, tenant compte dudit contenu à distribuer et/ou de ladite capacité d'interactivité de ladite entité cliente.

10. Contrôleur de gestion d'un contenu destiné à être distribué à au moins une entité cliente dans un réseau de communication, **caractérisé en ce qu'**il comprend les moyens suivants, mis en oeuvre pour ladite au moins une entité cliente :
- des moyens d'obtention (11) d'au moins une information de contexte d'utilisation de ladite entité cliente dans ledit réseau de communication ;
- des moyens de détermination (12) d'une capacité d'interactivité de ladite entité cliente, en fonction de ladite au moins une information de contexte d'utilisation ;
- des moyens de sélection (13), parmi un ensemble de présentations candidates pour ledit contenu, d'une présentation adaptée à ladite capacité d'interactivité.

11. Contrôleur de gestion selon la revendication 10, **caractérisé en ce qu'**il est localisé dans ladite entité cliente ou dans un serveur de distribution de contenus.

12. Système de distribution d'au moins un contenu à destination d'au moins une entité cliente dans un réseau de communication, **caractérisé en ce qu'**il comprend :
- un superviseur,
- au moins un serveur de distribution de contenus,
- ladite au moins une entité cliente,
ledit au moins un serveur de distribution de contenus ou ladite au moins une entité cliente comprenant un contrôleur de gestion comprenant :
- des moyens d'obtention d'au moins une information de contexte d'utilisation de ladite entité cliente dans ledit réseau de communication ;
- des moyens de détermination d'une capacité d'interactivité de ladite entité cliente, en fonction de ladite au moins une information de contexte d'utilisation ;
- des moyens de sélection, parmi un ensemble de présentations candidates pour ledit contenu, d'une présentation adaptée à ladite capacité d'interactivité.

13. Programme d'ordinateur comportant des instructions pour la mise en oeuvre d'un procédé de gestion selon la revendication 1 lorsque ledit programme est exécuté par un processeur.
